Europäisches Patentamt

European Patent Office

Office européen des brevets

(19)

(11) Publication number: **0 126 568**
**B1**

(12) # EUROPEAN PATENT SPECIFICATION

(45) Date of publication of patent specification: **01.07.87**

(51) Int. Cl.⁴: **B 32 B 27/08**

(21) Application number: **84302940.6**

(22) Date of filing: **01.05.84**

(54) **Multilayer packaging films.**

(30) Priority: **18.05.83 GB 8313717**

(43) Date of publication of application:
**28.11.84 Bulletin 84/48**

(45) Publication of the grant of the patent:
**01.07.87 Bulletin 87/27**

(84) Designated Contracting States:
**DE FR GB NL**

(56) References cited:
**WO-A-82/00953**
**DE-A-3 035 476**
**GB-A-1 409 958**
**GB-A-2 048 209**

(73) Proprietor: **BCL LIMITED**
**Bath Road**
**Bridgwater Somerset TA6 4PA (GB)**

(72) Inventor: **Dobbie, Derek James**
**Splatt Lane**
**Spaxton Bridgwater Somerset (GB)**
Inventor: **Williamson, Paul Kenyon**
**Staplegrove House**
**Staplegrove Taunton Somerset (GB)**

(74) Representative: **Allard, Susan Joyce et al**
**BOULT, WADE & TENNANT 27 Furnival street**
**London EC4A 1PQ (GB)**

Courier Press, Leamington Spa, England.

EP 0 126 568 B1

## Description

This invention is concerned with multilayer packaging films and in particular to films of high oxygen impermeability, transparency, flexibility and toughness.

Films of high oxygen impermeability are particularly useful for packaging foodstuffs, including liquids, which are spoilt by prolonged contact with oxygen. They normally comprise two or more layers including an outer layer of a readily heat-sealable polymer such as low density polyethylene together with an oxygen barrier layer such as an ethylene/vinyl alcohol copolymer layer, a vinylidene chloride copolymer layer, or a polymer layer carrying a metallised coating such as an aluminium coating formed by vacuum deposition.

Such a film is described in United Kingdom Patent Specification No. 1409958 in which a laminated composite sheet material for use in packaging comprises an intermediate layer of an ethylene/vinyl alcohol copolymer with two outer layers of polyethylene or polypropylene in which at least one of the outer layers and/or the intermediate layer additionally comprises an ionomer formed from an olefin monomer and/or an ethylene/vinyl acetate copolymer.

Films, especially for use in packaging liquids, are preferably transparent sufficiently for the contents of the packages to be viewed and are required to be tough and flexible to withstand rough handling during transport so as to avoid cracking and pin-holing which would lead to leaking of contents from the packages and break down of the oxygen barrier.

One cause of physical weakness in films of the prior art arises from heat-sealing operations when the films are made into bags or pouches on conventional heat-sealing machinery. During such operations, films are brought together, heat-sealable surface to heat-sealable surface, and are sealed together by pressure between heated reciprocating heat-sealing jaws. All the layers of the film are softened, the film temporarily becomes more stretchable in the heat-seal area and under the influence of the tension in the film drawing the film through the machine there is a distinct tendency for the film to stretch and distort in the heat-seal area.

The object of the present invention is to provide improved multilayer packaging films having high oxygen impermeability and toughness.

According to the present invention a multilayer heat-sealable film having a high oxygen impermeability comprising a surface layer of a heat-sealable polymer capable of forming seals with itself under pressure at a temperature in the range from 80° to 130°C, having a strength at ambient temperatures of at least 4.9 Newtons per 25 millimetres length of seal (when measured by a seal peeling method) and an oxygen barrier layer of an ethylene/vinyl alcohol copolymer characterised in that the film also includes a layer of polypropylene having an atactic content in the range from 10 to 25% by weight.

Adjacent layers may conveniently be bonded together by a suitable "tie layer" consisting of a polymeric adhesive such as a polyolefin grafted with a monomer having polar functional groups. A suitable adhesive for use in this application is a "Plexar" (registered trade mark) resin marketed by Chemplex of Illinois of the United States of America. In a preferred method of manufacture of the multilayer film the layers, including the tie layers, are coextruded.

The heat-sealable polymer may be any of the conventional heat-sealable polymers well known in the packaging art preferably capable of forming seals of adequate strength at a temperature from about 90°C to about 120°C. Examples are low density polyethylene, an ethylene vinyl acetate copolymer, or an ionomer such as is marketed under the trade mark "Surlyn" by Du Pont of the United States of America. A particularly useful polymer for this purpose having a high degree of toughness and flexibility is a linear low density polyethylene alone or blended with other polymers such as low density polyethylene or ethylene/vinyl acetate. Such polymers are capable of forming seals of adequate strength under conditions of heat and pressure for usual packaging purposes, that is, seals of strength at ambient temperatures of at least 4.9 Newtons per 25 millimetres length of seal when measured by a seal peeling method.

The ethylene/vinyl alcohol copolymer layer preferably has a vinyl alcohol content in the range from 50 to 75% by weight to provide an oxygen barrier which is suitable for most packaging purposes where prevention of oxygen spoilage of the packaged contents is of prime importance.

The polypropylene layer preferably has an atactic content in the range from 15% to 20% by weight of the polypropylene. Such a layer is clear, tough and capable of being freely flexed without cracking. Further, since the melting point of the polypropylene layer is in the range of from 150° to 165°C, during the normal heat-sealing conditions of the multilayer film (that is, the temperature at which the heat-sealable polymer layer is sealed) the integrity of the multilayer film is maintained by the polypropylene layer while under tension and thus distortion of the layers in the heat-seal area is avoided.

The invention also includes a method of manufacture of a multilayer heat-sealable film having a high oxygen impermeability comprising bringing together into surface contact a surface layer of a heat-sealable polymer capable of forming seals with itself under pressure at a temperature in the range from 80° to 130°C having a strength at ambient temperature of at least 4.9 Newtons per 25 millimetres length of seal (when measured by a seal peeling method) and an oxygen barrier of a layer of an ethylene/vinyl alcohol copolymer characterised in that a further layer of polypropylene having an atactic content in the range from 10% to 25% by weight is brought into the combination.

The invention will now be more particularly described by way of the following Example.

Example

A multilayer film consisting of three layers adhesively bonded to each other by tie layers was formed by extrusion in a molten state of the materials specified below through a flat coextrusion die followed by quenching upon a chilled roller. The order of feed of materials to the die and the dimensions of the die was such that the multilayer film was 90 μm in thickness and was made up of five layers in the following order:

Layer 1 — 56 μm in thickness — a linear low density polyethylene having a heat-sealing temperature of 115°C.

Layer 2 — 4 μm in thickness — an adhesive (tie) layer of a low density polyethylene modified by grafting to provide polar groups marketed by Chemplex of Illinois, United States of America, under the registered trade mark "Plexar 158".

Layer 3 — 6 μm in thickness — an ethylene/vinyl alcohol copolymer in which the vinyl alcohol content was 70%.

Layer 4 — 4 μm in thickness — an adhesive layer of "Plexar 158" as in Layer 2.

Layer 5 — 20 μm in thickness — polypropylene having an atactic content of 16% by weight as marketed by Badische Anilin Soda Fabrik of Ludwigshaven, Germany, under the trade mark "Novolen" and having a melting point in the range 157—162°C.

By "heat-sealing temperature" is meant the temperature at which two layers of the material under consideration will seal together to provide on cooling a sealed film combination which requires a force of 9.8 Newtons per linear 25 millimetres of seal to peel the layers apart.

The resulting film was clear and was readily converted into pouches and/or bags on conventional pouch and bag making machinery at normal speeds without distortion in the seal area. The film exhibited a high degree of flexibility and durability in use substantially without any sign of cracking or pin-holing and had an oxygen permeability of 1.0 millilitres per square metre per 24 hours under a pressure difference of one atmosphere and with a relative humidity of 75%.

Although reference has been made to coextrusion through a flat die it will be understood that a similar five-layered multilayer film may be prepared by extrusion through a tubular coextrusion die.

The multilayer films of the present invention are particularly suited for forming into bags for the packaging of liquids which are susceptible to spoilage by oxidation, for example, wine.

**Claims**

1. A multilayer heat-sealable film having a high oxygen impermeability comprising a surface layer of a heat-sealable polymer capable of forming seals with itself under pressure at a temperature in the range from 80° to 130°, having a strength at ambient temperatures of at least 4.9 Newtons per 25 millimetres length of seal (when measured by a seal peeling method) and an oxygen barrier layer of an ethylene/vinyl alcohol copolymer characterised in that the film also includes a layer of polypropylene having an atactic content in the range from 10 to 25% by weight.

2. A film as claimed in claim 1 on which the heat-sealable polymer is capable of forming the seals at a temperature within the range from about 90°C to about 120°C.

3. A film as claimed in claim 1 or claim 2 in which the adjacent layers are bonded together by a tie layer consisting of a polymeric adhesive.

4. A film as claimed in claim 1, claim 2 or claim 3 in which the heat-sealable layer is low density polyethylene, an ethylene/vinyl acetate copolymer, a linear low density polyethylene alone or blended with low density polyethylene or an ethylene/vinyl acetate copolymer, or is an ionomer.

5. A film as claimed in any one of the preceding claims in which the ethylene/vinyl alcohol has a vinyl alcohol content from 50 to 75% by weight.

6. A film as claimed in any one of the preceding claims in which the polypropylene layer has an atactic content in the range from 15% to 20% by weight.

7. A method of manufacture of a multilayer heat-sealable film having a high oxygen impermeability comprising bringing together into surface contact a surface layer of a heat-sealable polymer capable of forming seals with itself under pressure at a temperature in the range from 80° to 130°C having a strength at ambient temperature of at least 4.9 Newtons per 25 millimetres length of seal (when measured by a seal peeling method) and an oxygen barrier of a layer of an ethylene/vinyl alcohol copolymer characterised in that a further layer of polypropylene having an atactic content in the range from 10% to 25% by weight is brought into the combination.

8. A method as claimed in claim 7 in which the adjacent layers are bonded together by a tie layer consisting of a polymeric adhesive.

9. A method as claimed in claim 7 or claim 8 in which the film is formed by coextrusion of all the layers.

**Patentansprüche**

1. Mehrschichtige heißsiegelfähige Folie mit hoher Undurchlässigkeit für Sauerstoff, mit einer Oberflächenschicht aus einem heißsiegelfähigen Polymer mit der Eignung, unter Druck bei einer Temperatur im Bereich von 80°C bis 130°C Siegelverbindungen mit sich selbst zu bilden, deren Festigkeit bei Raumtemperatur mindestens 4,9 Newton pro 25 mm Länge der Siegelverbindung beträgt (gemessen nach der Abziehmethode), und mit einer Sauerstoffsperrschicht aus einem Äthylen/Vinylalkohol-Copolymer, dadurch gekennzeichnet, daß die Folie ferner eine Schicht aus Polypropylene mit einem ataktischen Anteil im Bereich von 10 bis 25 Gewichtsprozent aufweist.

2. Folie nach Anspruch 1, bei der das heißsiegelfähige Polymer zur Bildung der Siegelverbindungen bei einer Temperatur in einem Bereich von ca. 90°C bis ca. 120°C geeignet ist.

3. Folie nach Anspruch 1 oder 2, bei der benachbarte Schichten durch eine Haftschicht aus einem polymeren Haftmittel miteinander verbunden sind.

4. Folie nach Anspruch 1, 2 oder 3, bei der die heißsiegelfähige Schicht aus Polyäthylen niederer Dichte, Äthylen/Vinylazetat-Copolymer, linearem Polyäthylen niedriger Dichte allein oder in Mischung mit Polyäthylen niedriger Dichte oder einem Äthylen/Vinylazetat-Copolymer, oder aus einem Ionomeren besteht.

5. Folie nach einem der vorigen Ansprüche, bei der der Äthylen/Vinylalkohol einen Vinylalkoholanteil von 50—75 Gewichtsprozent aufweist.

6. Folie nach einem der vorigen Ansprüche, bei der die Polypropylenschicht einen ataktischen Anteil im Bereich von 15 bis 20 Gewichtsprozent aufweist.

7. Verfahren zur Herstellung einer mehrschichtigen heißsiegelfähigen Folie mit hoher Undurchlässigkeit gegen Sauerstoff, bei dem eine Oberflächenschicht aus einem heißsiegelfähigen Polymer mit der Eignung, unter Druck bei einer Temperatur in einem Bereich von 80°C bis 130°C mit sich selbst Siegelverbindungen zu bilden, deren Festigkeit bei Raumtemperatur mindestens 4,9 Newton pro 25 mm Länge der Siegelverbindung beträgt (gemessen nach der Abziehmethode), und eine Sauerstoffsperrschicht aus Äthylen/Vinylalkohol-Copolymer miteinander in Oberflächenkontakt gebracht werden, dadurch gekennzeichnet, daß eine weitere Schicht aus Polypropylen mit einem ataktischen Anteil im Bereich von 10 bis 25 Gewichtsprozent in die Kombination mit eingebracht wird.

8. Verfahren nach Anspruch 7, bei dem die benachbarten Schichten durch eine Haftschicht aus einem polymeren Haftmittel miteinander verbunden werden.

9. Verfahren nach Anspruch 7 oder 8, bei dem die Folie durch Coextrudieren aller drei Schichten hergestellt wird.

**Revendications**

1. Film multi-couches thermosoudable, ayant une imperméabilité élevée à l'oxygène comprenant une couche superficielle d'un polymère thermosoudable capable de former des soudures avec elle-même sous pression à une température se situant dans la gamme de 80° à 130°C et ayant une résistance à la température ambiante d'au moins 4,9 newtons par longueur de soudure de 25 mm (mesurée par un procédé de décollement de soudure) et une couche-barrière pour l'oxygène et un copolymère d'éthylène/alcool vinylique, caractérisé en ce qu'il contient aussi une couche de polypropylène ayant un teneur en polymère atactique comprise dans la gamme de 10 à 25 % en poids.

2. Film selon la revendication 1, dans lequel le polymère thermosoudable est capable de former les soudures à une température comprise dans le gamme d'environ 90°C à environ 120°C.

3. Film selon la revendication 1 ou 2, dans lequel les couches contiguës sont unies entre elles par une couche de liaison faite d'un adhésif polymère.

4. Film selon l'une quelconque des revendications 1 à 3, dans lequel la couche thermosoudable est faite d'un polyéthylène basse densité, d'un copolymère d'éthylène/acétate de vinyle, d'un polyéthylène basse densité à chaîne droite seul ou en mélange avec un polyéthylène basse densité ou un copolymère d'éthylène/acétate de vinyle, ou elle faite d'un ionomère.

5. Film selon l'une quelconque des revendications 1 à 4, dans lequel le copolymère d'éthylène/alcool vinylique a une teneur en alcool vinylique de 50 à 75 % en poids.

6. Film selon l'une quelconque des revendications 1 à 5, dans lequel la couche de polypropylène a une teneur en polymère atactique dans la gamme de 15 % à 20 % en poids.

7. Procédé de fabrication d'un film multicouches thermosoudable ayant une imperméabilité élevée à l'oxygène, consistant à réunir, en contact par les surfaces, une couche superficielle d'un polymère thermosoudable capable de former, sous pression à une température dans la gamme de 80° à 130°C, des soudures avec elle-même ayant une résistance à la température ambiante d'au moins 4,9 newtons par longueur de soudure de 25 mm (mesurée par un procédé de décollement de soudure), et une barrière à l'oxygène faite d'une couche de copolymère d'éthylène/alcool vinylique, caractérisé en ce qu'une couche supplémentaire de polypropylène ayant une teneur en polymère atactique dans la gamme de 10 % à 25 % en poids est introduite dans la combinaison.

8. Procédé selon la revendication 7, dans lequel les couches contiguës sont unies entre elles par une couche de liaison en un adhésif polymère.

9. Procédé selon la revendication 7 ou 8, dans lequel le film est formé par co-extrusion de toutes les couches.